# EUROPÄISCHE PATENTSCHRIFT

(11) **EP 3 110 764 B1**
(45) Veröffentlichungstag und Bekanntmachung des Hinweises auf die Patenterteilung: **01.07.2020**
(21) Anmeldenummer: 15707279.4
(22) Anmeldetag: 24.02.2015
(51) Int. Cl.: C02F 1/467, C02F 1/78, C02F 103/04, A61L 2/03, C02F 1/461

(54) **ELEKTRODENANORDNUNG FÜR EINE ELEKTROCHEMISCHE BEHANDLUNG EINER FLÜSSIGKEIT**
ELECTRODE ASSEMBLY FOR ELECTROCHEMICAL TREATMENT OF A FLUID
APPAREIL AVEC DES ÉLECTRODES POUR LE TRAITEMENT ÉLECTROCHIMIQUE D'UN FLUIDE

(30) Priorität: 25.02.2014 DE 102014203372
(43) Veröffentlichungstag der Anmeldung: 04.01.2017
(73) Patentinhaber: CONDIAS GMBH, 25524 Itzehoe (DE)
(72) Erfinder: FRYDA, Matthias, 25524 Itzehoe (DE); MATTHEE, Thorsten, 25582 Hohenaspe (DE); SCHMIDT, Andrea, 25569 Kremperheide (DE); HEESCH, Linda, 25588 Mehlbek (DE); BEHRENDT-FRYDA, Barbara, 25524 Itzehoe (DE)
(74) Vertreter: Friedrich, Andreas
(86) Internationale Anmeldenummer: PCT/EP2015/000415
(87) Internationale Veröffentlichungsnummer: WO 2015/128077

(56) Entgegenhaltungen:
- WO-A1-2004/079051
- GB-A- 2 490 912
- JP-A- 2004 130 262
- US-A1- 2010 320 082

## Beschreibung

Die Erfindung betrifft eine Elektrodenanordnung für eine elektrochemische Behandlung einer Flüssigkeit, wobei die Elektrodenanordnung zwei Elektroden mit jeweils wenigstens einer Elektrodenoberfläche und wenigstens eine Durchflusskammer mit wenigstens einem Zulauf und wenigstens einem Ablauf aufweist, wobei die wenigstens eine Durchflusskammer an zumindest einer ersten Seite durch wenigstens eine Elektrode begrenzt wird, die an ihrer Elektrodenoberfläche eine Struktur aufweist, so dass ein Abstand zwischen der Elektrodenoberfläche und einer der ersten Seite gegenüberliegenden zweiten Seite der Durchflusskammer variiert. Die Erfindung betrifft zudem eine Elektrode für eine derartige Elektrodenanordnung sowie ein Verfahren zum Betreiben einer solchen Elektrodenanordnung. Die Erfindung betrifft zudem ein Verfahren zum Herstellen von ozonisiertem Wasser mittels einer derartigen Elektrodenanordnung.

Eine gattungsgemäße Vorrichtung ist beispielsweise aus der EP 1 730 080 B1 bekannt. Bei einem Verfahren zum Betreiben der Vorrichtung wird Wasser durch die wenigstens eine Durchflusskammer geleitet, wobei es durch den Zulauf in die Durchflusskammer hinein und durch den Ablauf aus der Durchflusskammer herausgelangt. Innerhalb der Durchflusskammer kommt es in Kontakt oder zumindest in die räumliche Nähe der mit einer elektrischen Spannung beaufschlagten Elektroden, so dass Wassermoleküle, die zwischen den einzelnen Elektroden angeordnet sind, in Aus der DE 299 16 125 U1 ist beispielsweise eine Elektrodenanordnung und eine Elektrode für die elektrochemische Ozonerzeugung bekannt. Die Wassermoleküle werden hydrolytisch aufgespalten, wobei aus den zu entstehenden Sauerstoffionen innerhalb des Wassers Ozon gewonnen werden kann. Ozon ist als Oxidationsmittel für die Reinigung und Desinfektion und Entkeimung von Oberflächen geeignet, so dass auf diese Weise ozonisiertes Wasser, das für die Desinfektion von Oberflächen verwendet werden kann, hergestellt wird.

Aus der JP 2004/130262 A ist eine Vorrichtung zum Herstellen von elektrolysiertem Wasser bekannt, bei der das verwendete Wasser durch Öffnungen in den Elektroden hindurch oder um die Elektroden herum strömen kann. Eine ähnliche Vorrichtung zeigt auch die US 2010/0320082 A1. Aus der DE 199 22 665 A1 sowie aus der bereits genannten DE 299 16 125 U1 ist bekannt, als Elektroden beispielsweise Diamantelektroden zu verwenden, die eine feinkristalline Diamantschicht an der Oberfläche eines dreidimensionalen Grundkörpers aufweisen. Für Elektrodenanordnungen werden im Stand der Technik jedoch auch andere Elektrodenformen, beispielsweise Gitterelektroden, beispielsweise Bleidioxid- oder Platingitterelektroden verwendet.

Weitere Ausgestaltungen entsprechender Elektrodenanordnungen sind beispielsweise aus der US 7,074,316 B2 und der US 6,565,736 B2, US 2010/320082 A1, GB 2 490 912 A bekannt.

Neben den bereits beschriebenen Platten- und Gitterelektroden für elektrochemische Reaktionen werden vereinzelt auch dreidimensionale Festbettelektroden, die aus einer Schüttung von Festkörpern bestehen, verwendet. Ziel ist es jeweils, dem beim Lösen im Wasser in Ionen aufgespalteten Elektrolyten eine auf den Elektrolyten angepasste und möglichst große Elektrodenoberfläche zu bieten. Insbesondere bei Metallelektroden und anderen katalytisch wirkenden Elektrodenmaterialien, bei denen die elektrochemischen Reaktionen potenzialgesteuert ablaufen, ist dabei jedoch darauf zu achten, dass strukturierte Elektroden zu einer inhomogenen Verteilung des elektrischen Feldes an der Oberfläche der Elektrode führen, so dass auch die jeweils pro Flächeneinheit umgesetzte Menge der Reaktionsprodukte schwankt.

Solange keine Folgereaktionen oder Mischungen der Elektrolyt-Ionen erforderlich sind, ist das aus dem Stand der Technik bekannte Vorgehen erfolgreich. Sofern jedoch eine homogene Verteilung der Elektrolyt-Ionen in der Flüssigkeit benötigt wird oder eine Folgereaktion der erzeugten Ionen gewünscht ist, sind Massentransportphänomene, wie beispielsweise die Diffusion, zu berücksichtigen. In diesem Fall stellen diese Phänomene eine Limitierung der elektrochemischen Effizienz dar, da beispielsweise die Diffusion der Ionen in Wasser nur sehr langsam stattfindet.

Der Erfindung liegt daher die Aufgabe zugrunde, eine Elektrodenanordnung sowie eine Elektrode für eine derartige Anordnung vorzuschlagen, mit der die elektrochemische Effizienz auch für den Fall gesteigert werden kann, dass Folgereaktionen und/oder Mischungen erforderlich sind. Die Erfindung soll zudem ein Verfahren zum Betreiben einer derartigen Elektrodenanordnung sowie ein Verfahren zum Herstellen von ozonisiertem Wasser mit einer solchen Elektrodenanordnung vorschlagen.

Die Erfindung löst die gestellte Aufgabe durch eine Elektrodenanordnung gemäß dem Oberbegriff des Anspruchs 1, die sich dadurch auszeichnet, dass die Struktur wenigstens 30 % der Elektrodenoberfläche bildet und derart ausgebildet ist, dass der Abstand zwischen der Elektrodenoberfläche und der zweiten Seite entlang wenigstens einer Richtung mehrfach zu- und abnimmt und dass durch die Durchflusskammer fließende Flüssigkeit durch die Struktur durchmischt und insbesondere in eine turbulente Strömung versetzt wird. Die Struktur weist dabei eine Tiefe von wenigstens 0,2 mm auf. Das bedeutet, dass der Abstand zwischen der Elektrodenoberfläche und der gegenüberliegenden Seite der Kammer in zumindest einer Richtung mehrfach um wenigstens 0,2 mm zu- und abnimmt.

Unter der Elektrodenoberfläche wird dabei die reale Oberfläche der Elektrode verstanden, also die Fläche, die beim bestimmungsgemäßen Gebrauch der Elektrodenanordnung mit einer Flüssigkeit in Kontakt kommt. Handelt es sich bei der Struktur beispielsweise um wenigstens eine in die Elektrode eingebrachte Rechtecknut, zählen sowohl der Grund oder Boden dieser Nut als auch die Seitenwände der Nut mit zur Elektrodenoberfläche, da sie beim bestimmungsgemäßen Gebrauch der Elektrodenanordnung mit Flüssigkeit in Kontakt kommen. Die Elektrodenoberfläche wird somit durch die Struktur gegenüber einer ebenen Fläche vergrößert. Als Struktur wird dabei insbesondere alles verstanden, was die Elektrodenoberfläche gegenüber einer planen Fläche mit gleichen Außenabmessungen vergrößert, also insbesondere Erhöhungen und/oder Vertiefungen. Die plane Fläche mit gleichen Außenabmessungen wie die Elektrode wird im Folgenden als Grundfläche der Elektrode bezeichnet und weist folglich definitionsgemäß keinerlei Strukturen auf.

Bei herkömmlicherweise verwendeten Gitterelektroden oder Plattenelektroden strömt die Flüssigkeit parallel zu der Elektrodenoberfläche, so dass sich eine Geschwindigkeit des strömenden Mediums mit abnehmendem Abstand zur Elektrodenoberfläche verringert. Dies hat zur Folge, dass Massentransportphänomene berücksichtigt werden müssen und insbesondere der limitierende Faktor sind. Gleiches gilt für aus dem Stand der Technik ebenfalls bekannte Lochelektroden, bei denen die Flüssigkeit senkrecht zur Elektrodenoberfläche durch in den Elektroden vorhandene Löcher strömt, wobei ebenfalls eine gleichmäßige und laminare Strömung bevorzugt wird, um eine möglichst große Menge der Flüssigkeit durch die Elektroden hindurchführen zu können. Bei dieser Ausgestaltung nimmt die Geschwindigkeit des strömenden Mediums mit abnehmendem Abstand zur Elektrodenfläche ebenfalls ab. Da die Ionen jedoch in allen genannten Fällen sehr nah an der Elektrodenoberfläche erzeugt werden, kommt es hier nicht zu einer Durchmischung oder anderweitigen Verteilung der Ionen.

Anders als bei diesen Ausführungsformen wird bei einer erfindungsgemäßen Elektrodenanordnung ein Großteil der Elektrodenoberfläche, nämlich wenigstens 30 %, durch die Struktur an der Elektrodenoberfläche gebildet, die so ausgebildet ist, dass die durch die Durchflusskammer fließende Flüssigkeit durchmischt und in eine turbulente Strömung gebracht wird. Dadurch werden die Massentransportlimitierungen überwunden und die Effizienz des elektrochemischen Prozesses gesteigert. Die Flüssigkeit fließt direkt an den elektrochemisch aktiven Elektrodenoberflächen vorbei und die erzeugten Ionen werden durch die turbulente Strömung und die Durchmischung der Flüssigkeit besonders schnell und gleichmäßig in der Flüssigkeit verteilt. Auf eine Diffusion der Ionen innerhalb der Flüssigkeit muss nicht mehr abgestellt werden.

Die Struktur ist erfindungsgemäß derart ausgebildet, dass der Abstand zwischen der Elektrodenoberfläche und der zweiten Seite, die die Durchflusskammer auf der der Elektrode gegenüberliegenden Seite begrenzt, entlang wenigstens einer Richtung mehrfach zu- und abnimmt. Diese wenigstens eine Richtung kann beispielsweise die Durchflussrichtung sein. Die Struktur umfasst vorteilhafterweise eine Vielzahl von Vertiefungen, die nahezu beliebige Formen aufweisen können. Werden mehrere dieser Vertiefungen, die untereinander identisch oder unterschiedlich ausgebildet sein können, entlang der wenigstens einen Richtung hintereinander angeordnet, führt dies zum gewünschten Effekt, dass der Abstand zwischen der Elektrodenoberfläche und der zweiten Seite der Durchflusskammer mehrfach zu- und abnimmt. Als vorteilhaft hat sich herausgestellt, wenn der genannte Abstand in mehr als nur dieser einen Richtung mehrfach zu-und abnimmt. In einer bevorzugten Ausgestaltung ist die Elektrodenoberfläche mit einer Struktur versehen, die dafür sorgt, dass in jeder Richtung, die sich parallel zur Elektrodenoberfläche erstreckt, der Abstand zwischen dieser Elektrodenoberfläche und der gegenüberliegenden zweiten Seite der Durchflusskammer mehrfach zu- und abnimmt. Dabei ist es auch denkbar, dass es Bereiche gibt, in denen der Abstand zu Null wird, so dass die Elektrodenoberfläche die gegenüberliegende Seitenwand berührt. Dabei ist natürlich wichtig, dass die elektrische Isolierung zwischen den beiden Elektroden der Elektrodenanordnung weiter gewahrt bleibt. Bereiche, in denen der Abstand zwischen der Elektrodenoberfläche und der gegenüberliegenden zweiten Seite Null wird, können beispielsweise linienförmig angeordnet sein oder inselartig über die Durchflusskammer verteilt sein. Die tatsächlich gewählte Form der Struktur sowie der die Struktur bildenden Strukturelemente hängt dabei von den gewünschten Reaktionen, der verwendeten Flüssigkeiten sowie der benötigten Durchflussmengen und der anzulegenden elektrischen Spannungen beziehungsweise des elektrischen Stromes ab.

Unter der Struktur, die wie bereits dargelegt aus einer Vielzahl von Strukturelementen bestehen kann, wird im Rahmen dieser Anmeldung folglich der Teil der Elektrodenoberfläche verstanden, bei dem der Abstand zwischen der Elektrodenoberfläche und der gegenüberliegenden zweiten Seite der Durchflusskammer variiert, mithin also entlang zumindest einer Richtung mehrfach zu- und abnimmt.

Vorteilhafterweise bildet die Struktur wenigstens 50 %, bevorzugt wenigstens 60 %, weiter bevorzugt wenigstens 75 %, besonders bevorzugt wenigstens 90 % der Elektrodenoberfläche. Auch Elektroden, bei denen die Struktur 100 % der Elektrodenoberfläche bildet, sind möglich. Die Strukturen an der Elektrodenoberfläche beeinflussen folglich die Hydrodynamik der durch die wenigstens eine Durchflusskammer fließenden Flüssigkeit, so dass beispielsweise ein statischer Mischer in die aktive Elektrodenoberfläche integriert werden kann. Die jeweilige Struktur der Elektrodenoberfläche wird im Optimalfall an den jeweiligen Elektrolytvolumenfluss und die spezifischen Reaktionen angepasst. So kann beispielsweise die elektrochemische Reaktion durch gezielte Abdeckungen, beispielsweise durch die dafür erforderlichen Dichtungen, in hydrodynamisch relevante Zonen gedrängt werden. Dadurch kann eine Durchmischung weiter optimiert werden, so dass die Effizienz der elektrochemischen Reaktionen weiter gesteigert werden kann.

In einer bevorzugten Ausgestaltung handelt es sich bei der eingebrachten Struktur um eine Mehrzahl linearer Kanäle, die beispielsweise als V-Nuten ausgebildet sein können. Die Tiefen dieser Kanäle betragen beispielsweise 0,5 mm, 0,8 mm oder 1,6 mm. Durch diese Strukturen wird die tatsächliche Elektrodenoberfläche gegenüber der Grundfläche der jeweiligen Elektrode, also einer planen Fläche mit den gleichen Abmessungen wie die Elektrode vergrößert. Das Verhältnis zwischen tatsächlicher Elektrodenoberfläche und Grundfläche der Elektrode beträgt dabei beispielsweise 1,24, 1,384 oder 1,768. Werden beispielsweise Vertiefungen verwendet, die halbkugelförmig ausgebildet sind, kann dieser Faktor beispielsweise drei sein.

Erfindungsgemäß handelt es sich bei der wenigstens einen Elektrode um eine Diamantelektrode. Besonders bevorzugt sind alle verwendeten Elektroden Diamantelektroden.

Bei herkömmlichen katalytisch aktiven Elektrodenmaterialien, die beispielsweise bei Metall-, Graphit- oder Mischoxidelektroden vorliegen, wird durch die Strukturierung die Ausbildung des elektrischen Feldes an einer Elektrode relativ zur Gegenelektrode beeinflusst. Die Stärke des elektrischen Feldes variiert folglich entlang der Oberfläche der Elektrode, so dass es auch zu einer inhomogenen Entstehung von Elektrolyt-Ionen kommt. Auch wenn die genannten Materialien ebenfalls für eine hier beschriebene Vorrichtung gemäß einem Ausführungsbeispiel der vorliegenden Erfindung verwendet werden können, sind Diamantelektroden diesen Materialien vorzuziehen. Bei Diamantelektroden handelt es sich um Elektroden mit einem Grundkörper aus einem Substrat, beispielsweise Silizium, auf das eine polykristalline Diamantschicht aufgebracht ist. Diese nichtkatalytisch aktiven Elektroden können stromkontrolliert betrieben werden, so dass trotz der Strukturierung eine homogenere Verteilung des elektrischen Feldes über die Oberfläche der Elektrode gewährleistet werden kann. Auf diese Weise werden die Vorteile der vorliegenden Erfindung voll realisiert, ohne dass es zu Nachteilen durch eine inhomogene Feldverteilung und damit eine inhomogene lonenerzeugung kommt.

Bevorzugt verfügt die Elektrodenanordnung über zwei Durchflusskammern, die jeweils an zumindest einer ersten Seite durch wenigstens eine Elektrode begrenzt werden, die an ihrer Elektrodenoberfläche eine Struktur aufweisen, so dass ein Abstand zwischen der Elektrodenoberfläche und einer der ersten Seite gegenüberliegenden zweiten Seite der jeweiligen Durchflusskammer variiert. Dadurch wird in beiden nebeneinander vorhandenen Durchflusskammern die Durchmischung und turbulente Strömung realisiert, die nötig ist, um die Massentransportphänomene nicht als Limitierung der elektrochemischen Effizienz beachten zu müssen. Die Elektroden können dabei für beide Durchflusskammern identisch oder beispielsweise mit unterschiedlichen Strukturen ausgebildet sein. Sie können aus dem gleichen oder auch aus verschiedenen Materialien hergestellt sein. Bevorzugt handelt es sich natürlich bei beiden Elektroden um Diamantelektroden, die eine auf den jeweiligen Flüssigkeitsvolumenstrom und die gewünschten Reaktionen und Reaktionsprodukte angepasste Struktur aufweisen.

In einer bevorzugten Ausgestaltung sind die beiden Durchflusskammern durch eine Membran getrennt, die die jeweils zweite Seite beider Durchflusskammern bildet. Diese Membran ist besonders vorteilhafter Weise eine ionenselektive Membran, wie sie aus dem Stand der Technik per se bekannt ist. Auf diese Weise lassen sich eine Vielzahl unterschiedlicher Reaktionen ausnutzen und eine große Anzahl unterschiedlicher Ionen erzeugen.

Vorteilhafterweise befindet sich zwischen den beiden Durchflusskammern eine dritte Durchflusskammer, die durch jeweils eine Membran von der ersten Durchflusskammer und von der zweiten Durchflusskammer getrennt. Beide Membrane können in einer bevorzugten Ausgestaltung ebenfalls ionenselektiv ausgebildet sein, wobei die beiden Membrane bevorzugt unterschiedliche Ionen passieren lassen. Auf diese Weise lassen sich in den drei benachbarten Kammern unterschiedliche Reaktionen erzeugen, die kontrolliert ablaufen und so zu unterschiedlichen Reaktionsprodukten und Ionen in den jeweiligen Flüssigkeiten führen. Auf diese Weise lassen sich unterschiedliche Produkte gleichzeitig gegebenenfalls als Erzeugnisse der gleichen Reaktion erzeugen.

Erfindungsgemäß weist die Struktur eine Vielzahl von Vertiefungen, Kanälen oder Nuten oder Rillen auf, die insbesondere eine variierende Breite aufweisen können. Es kann sich um Kanäle mit definierter Breite und Tiefe handeln, wobei Breite und/oder Tiefe im Verlauf der jeweiligen Kanäle variieren kann. Auch Kanäle mit konstanter Breite und Tiefe sind möglich. Die Kanäle können parallel zueinander, einander in einem Winkel kreuzend, der vorzugsweise 90 Grad beträgt, oder beispielsweise wellenförmig oder gekrümmt angeordnet sein. Die Abstände zwischen den einzelnen Vertiefungen, Rillen oder Kanälen können äquidistant über die gesamte Elektrodenoberfläche sein oder variierend ausgewählt werden. So kann es von Vorteil sein, wenn beispielsweise in einigen Bereichen der Elektrodenoberfläche mehr Elemente vorhanden sind, die die Struktur bilden, als dies in anderen Bereichen der Elektrodenoberfläche der Fall ist. Auf diese Weise lassen sich gezielt Bereiche mit turbulenter Strömung und guter Durchmischung der durch die Durchflusskammern fließenden Flüssigkeit erreichen, die sich mit Bereichen von ruhiger und laminarer Strömung abwechseln.

In einer bevorzugten Ausgestaltung weist die Struktur eine Vielzahl von Vertiefungen auf, die einander insbesondere überlappen können und beispielsweise kugelflächensegmentförmig ausgebildet sind. Es handelt sich folglich um Vertiefungen, in denen die Elektrodenoberfläche kugelflächensegmentförmig, vorzugsweise nach innen, also von der der Elektrode gegenüberliegenden Wand der Durchflusskammer weg, gekrümmt ist. Wenn mehrere dieser Vertiefungen einander überlappen, bedeutet dies, dass eine eine jeweilige Vertiefung umgebende Randlinie nicht kreisförmig ist. Zudem liegt eine derartige Linie nicht in einer konstanten Ebene. Natürlich sind auch Vertiefungen denkbar, die nicht kugelflächensegmentförmig ausgebildet sind, sondern beispielsweise polygonale, paraboloide oder unregelmäßige Formen aufweisen. Auch hier können Bereiche größerer Vertiefungsdichte, bei denen folglich mehr Vertiefungen in einem bestimmten Flächenabschnitt vorhanden sind, sich mit Bereichen geringerer Vertiefungsdichte abwechseln, bei denen die Anzahl von Vertiefungen pro Flächeneinheit folglich geringer ausfällt. Auch hierdurch lässt sich die Strömung im Inneren der Durchströmkammer beeinflussen und gezielt auf die gewünschten Parameter einstellen.

Die Erfindung löst die gestellte Aufgabe zudem für eine Elektrode für eine derartige Elektrodenanordnung.

Die Erfindung löst die gestellte Aufgabe zudem durch ein Verfahren zum Betreiben einer derartigen Elektrodenanordnung, das sich dadurch auszeichnet, dass die Flüssigkeit durch den wenigstens einen Zulauf in die wenigstens eine Durchflusskammer eingeleitet wird, innerhalb der Durchflusskammer durch die Struktur auf der Elektrodenoberfläche durchmischt und insbesondere in eine turbulente Strömung versetzt wird und die wenigstens eine Durchflusskammer durch den wenigstens einen Ablauf verlässt. Dabei ist es ausreichend, wenn die durch die Durchflusskammer fließende Flüssigkeit zumindest bereichsweise durch die Struktur an der Elektrodenoberfläche durchmischt und insbesondere in eine turbulente Strömung versetzt wird. Je nach gewünschten Reaktionen, Eingangs- und Ausgangsprodukten sowie der gewünschten Durchflussmenge können die Dimensionierungen der verschiedenen Elektroden sowie die spezielle Form und Ausgestaltung der Struktur angepasst werden.

Vorteilhafterweise wird eine Flüssigkeit durch jede der vorhandenen Durchflusskammern geleitet, wobei durch unterschiedliche Durchflusskammern unterschiedliche Mengen der jeweiligen Flüssigkeit geleitet werden. Wird beispielsweise die Struktur an der Elektrodenoberfläche zumindest einer der Elektroden so gewählt, dass einerseits eine große Elektrodenoberfläche vorhanden ist, so dass eine große Menge von Ionen und/oder Reaktionsprodukten erzeugt wird und andererseits durch die Struktur erreicht wird, dass diese große Menge an Ionen oder Reaktionsprodukten sich besonders schnell und gut und möglichst homogen in der Flüssigkeit innerhalb der einen Durchflusskammer verteilt, wird dadurch gleichzeitig sichergestellt, dass eine große Menge an Reaktionsprodukten und/oder Ionen zu der insbesondere vorteilhafterweise ionenselektiven Membran geleitet wird. Dadurch wird auch die Menge der Ionen, die durch die Membran hindurchtreten und so die jeweils andere Durchflusskammer erreichen, stark erhöht. Da auf diese Weise die Menge der in die jeweils andere Durchflusskammer übertretenden Ionen erhöht wird, kann die Durchflussmenge in der jeweils anderen Durchflusskammer erhöht werden. Dadurch wird die Effizienz des Verfahrens erhöht und gleichzeitig die entsorgende Abwassermenge verringert.

Die Erfindung löst die gestellte Aufgabe zudem durch ein Verfahren zum Herstellen von ozonisiertem Wasser mit einer derartigen Elektrodenanordnung, bei dem reines Wasser, insbesondere destilliertes Wasser oder Ultrareinstwasser, durch die erste Durchflusskammer und durch die zweite Durchflusskammer geleitet wird, und das reine Wasser, insbesondere das destillierte Wasser oder Ultrareinstwasser, in den Durchflusskammern durch die Strukturen der Elektrodenoberflächen durchmischt und insbesondere in eine turbulente Strömung versetzt wird, und die Elektroden mit einer elektrischen Spannung beaufschlagt werden, so dass sich in einer der Durchflusskammern ozonisiertes Wasser bildet.

Vorteilhafterweise verfügen die Anode und die Kathode über unterschiedliche Strukturen. Auf diese Weise ist es besonders einfach möglich, die Elektrodenoberflächen an die jeweiligen Anforderungen und Bedürfnisse, die beispielsweise von Durchflussmenge, gewünschter Konzentration und verwendeten Ionen abhängen, anzupassen. Zudem liegen bei der hier beschriebenen Ausgestaltung die Membrane großflächiger an den Elektroden an, als dies beispielsweise bei den aus dem Stand der Technik bekannten Gitterelektroden der Fall ist. Daher wird zum einen der Kontakt zwischen der Elektrode und der Membran verbessert und zum anderen die thermische und/oder mechanische Belastung der Membrane, denen diese ausgesetzt sind, reduziert.

In einer beispielhaften Ausgestaltung des Verfahrens zum Herstellen von ozonisiertem Wasser wird demineralisiertes Wasser direkt durch die Anodenkammer der Elektrolysezelle geleitet. Anodisch wird dabei durch die Elektrolyse ab etwa einem Strom von ca. 2 A, der einer Stromdichte von ca. 14 mA pro cm² entspricht, Ozon nachweisbar erzeugt und im Wasser gelöst. Dabei steigt die Ozonproduktion mit zunehmendem Strom linear an. Die erzeugte Menge an Ozon pro gewählter Zeiteinheit ist dabei von der Größe des Volumenstroms der Flüssigkeit, die durch die Kammern geleitet wird, nahezu unabhängig. Allerdings kommt es bei unterschiedlichen Volumenströmen zu unterschiedlichen hydrodynamischen Zuständen, wodurch mehr oder weniger des gasförmigen Ozons im Wasser gelöst werden kann. Ein größerer Volumenstrom führt zu größeren Turbulenzen innerhalb der jeweiligen Kammer und damit zu kleineren Gasblasen des an der Anodenoberfläche erzeugten Ozons. Durch die kleineren Gasblasen wird die Kontaktfläche bzw. Grenzfläche zwischen dem gasförmigen Ozon und dem umgebenden Wasser erhöht, sodass mehr Ozon im Wasser gelöst werden kann.

Um möglichst viel Ozon in einer vorgegebenen Menge Wasser zu lösen, ist es folglich nicht unbedingt ratsam, die Strömungsgeschwindigkeit des Wassers zu reduzieren und so dafür zu sorgen, dass das Wasser möglichst lange in Kontakt mit der Anodenoberfläche bleibt. Unter bestimmten Umständen ist es sinnvoller, die Strömungsgeschwindigkeit größer zu wählen, sodass anteilig mehr Ozon im Wasser gelöst werden kann. Sollte auf diese Weise keine ausreichende Ozonkonzentration im Wasser erreicht werden können, kann das Wasser erneut durch die Anodenkammer geleitet werden und so die Ozonkonzentration erhöht werden. Dabei gilt es jedoch zu beachten, dass Ozon im Wasser einem natürlichen Zerfall in Sauerstoff unterliegt.

Mit Hilfe der beiliegenden Zeichnungen werden Ausführungsbeispiele der vorliegenden Erfindung näher erläutert. Es zeigt:
- Figur 1a bis 1d -: eine Elektrode gemäß einem ersten Ausführungsbeispiel der vorliegenden Erfindung in unterschiedlichen Ansichten,
- Figur 2 -: die schematische Darstellung einer Elektrodenanordnung gemäß einem Ausführungsbeispiel der vorliegenden Erfindung,
- Figur 3a und 3b -: zwei Schnittdarstellungen durch die in Figur 2 gezeigte Elektrodenanordnung,
- Figur 4 -: die Elektrodenanordnung aus Figur 2 im aufgeklappten Zustand,
- Figur 5 -: die schematische Draufsicht auf eine Elektrode und
- Figur 6a bis 6c -: Schnittdarstellungen durch unterschiedlich geformte Elektroden gemäß Figur 5.

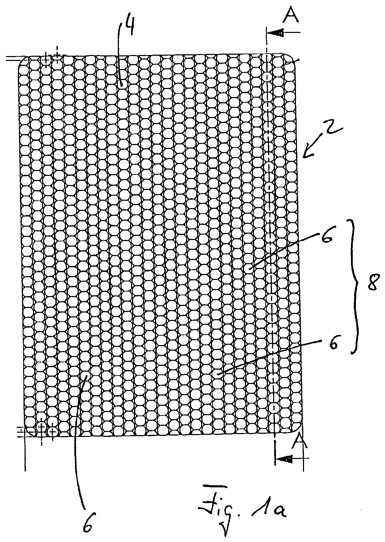

Figur 1a zeigt eine Elektrode 2 mit Blick auf eine Elektrodenoberfläche 4. Die Elektrodenoberfläche 4 verfügt über eine Vielzahl von Vertiefungen 6, die im gezeigten Ausführungsbeispiel kugelflächensegmentförmig ausgebildet sind. Die Vertiefungen 6 bilden gemeinsam eine Struktur 8 der Elektrodenoberfläche 4. Man erkennt, dass die einzelnen Vertiefungen 6 einander überlappen, so dass die in Figur 1a gezeigten Begrenzungslinien der Vertiefungen 6 nicht exakt kreisförmig ausgebildet sind.

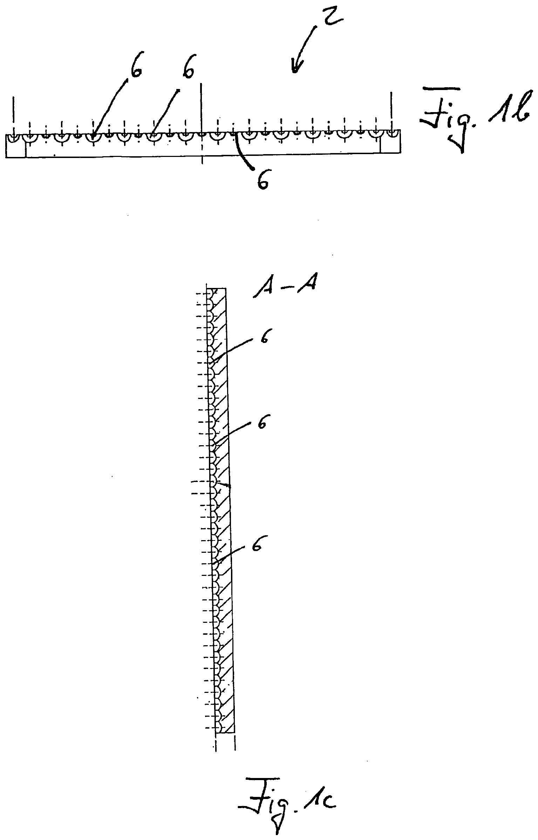

Figur 1b zeigt die Elektrode 2 in einer Seitenansicht. Man erkennt die einzelnen Vertiefungen 6, die nebeneinander angeordnet sind und in der Seitenansicht unterschiedlich tief dargestellt sind. Zwischen den einzelnen Vertiefungen 6 gibt es Bereiche, in denen die Elektrodenoberfläche 4 über keine Vertiefungen 6 verfügt.

Bei der Elektrode 2 handelt es sich vorteilhafterweise um eine Diamantelektrode, die die bereits aufgezeigten Vorteile aufweist.

Figur 1c zeigt eine Schnittdarstellung entlang der Linie A-A aus Figur 1a. Man erkennt hier, dass die einzelnen Vertiefungen 6 einander überlappen, so dass die zwischen zwei benachbarten Vertiefungen 6 entstehenden Strukturen nicht die volle Höhe der Elektrodenoberfläche 4 erreichen, wie sie beispielsweise zwischen zwei benachbarten Linien von Vertiefungen 6 vorhanden ist.

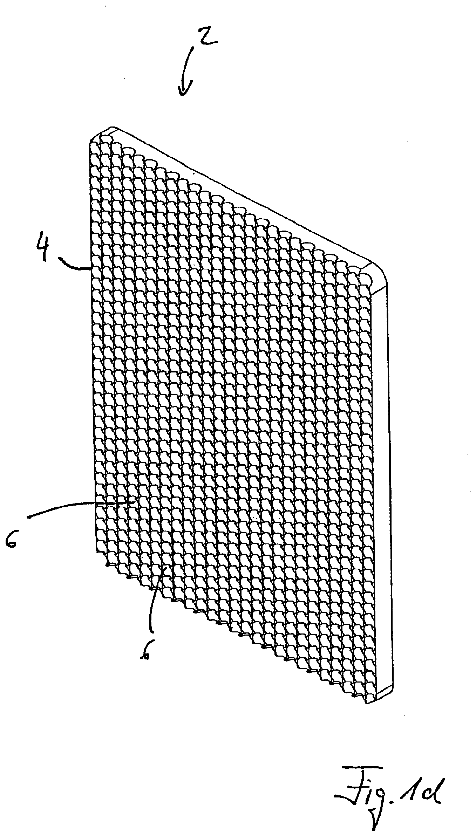

Figur 1d zeigt eine schematische 3D-Ansicht der Elektrode 2 mit der Vielzahl an Vertiefungen 6. Natürlich können die Vertiefungen 6 auch andere geometrische Formen aufweisen und müssen nicht regelmäßig angeordnet sein.

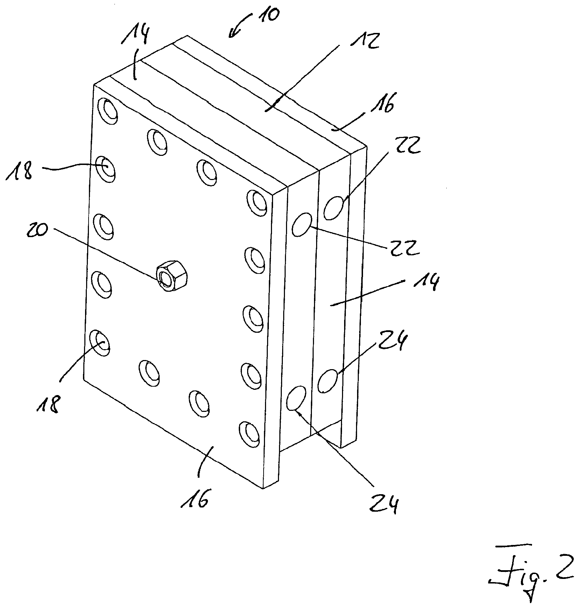

Figur 2 zeigt eine Elektrodenanordnung 10, die in einem Gehäuse 12 angeordnet ist. Das Gehäuse 12 besteht im gezeigten Ausführungsbeispiel aus zwei Kammergehäusen 14 und wird von zwei Abdeckplatten 16 begrenzt. Die Abdeckplatten verfügen über Bohrungen 18, die mit in den Kammergehäusen 14 vorhandenen Bohrungen fluchtend angeordnet sind, so dass hier beispielsweise über Schraubverbindungen ein sicherer Halt der einzelnen Bauteile einander gewährleistet werden kann.

Zentral auf der vorderen Abdeckplatte 16 befindet sich ein elektrischer Anschluss 20, über den eine der beiden Elektroden 2, die im Inneren des Gehäuses 12 angeordnet sind, mit elektrischem Strom bzw. einer elektrischen Spannung beaufschlagt werden kann. Die rückseitige Abdeckplatte 16 verfügt im gezeigten Ausführungsbeispiel über einen analogen elektrischen Anschluss 20.

Die einzelnen Kammergehäuse 14 verfügen zudem über jeweils einen Zulauf 22 und einen Ablauf 24, durch den die elektrochemisch zu behandelnde Flüssigkeit in die Kammergehäuse 14 eingelassen bzw. aus ihnen entfernt werden kann.

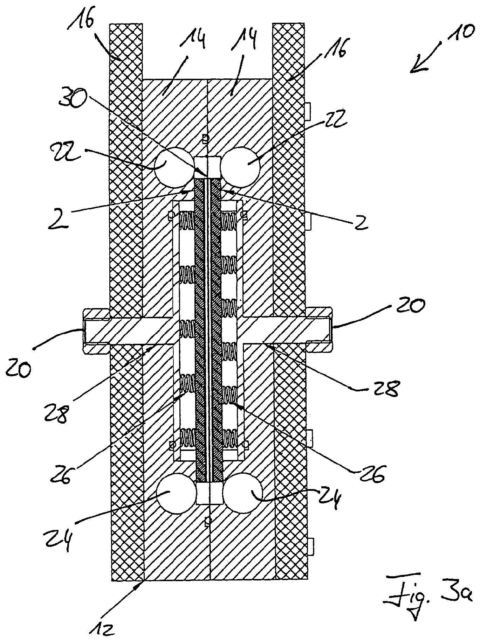

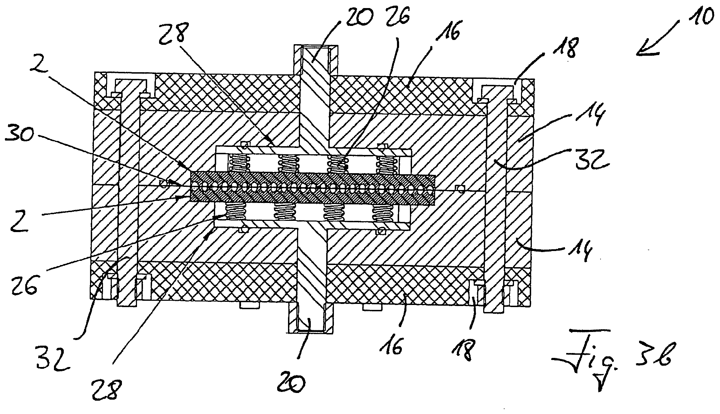

Figur 3a und 3b zeigen Schnittdarstellungen durch die in Figur 2 gezeigte Elektrodenanordnung 10. Figur 3a zeigt einen Längsschnitt. Man erkennt zunächst die beiden Kammergehäuse 14 mit den Zuläufen 22 und den Abläufen 24 sowie die Abdeckplatten 16 mit den elektrischen Anschlüssen 20. Im Inneren befinden sich zwei Elektroden 2, die über Kontaktfedern 26 und Kontaktplatten 28, die mit den elektrischen Anschlüssen 20 elektrisch verbunden sind, mit elektrischem Strom und einer elektrischen Spannung versorgt werden können. Zwischen den beiden Elektroden 2 befindet sich eine Membran 30, durch die zwei Durchflusskammern voneinander getrennt werden.

Die in Figur 3a gezeigt Elektrodenanordnung 10 verfügt über zwei Durchflusskammern. Die zu bearbeitende Flüssigkeit tritt durch den jeweiligen Zulauf 22 in die jeweilige Durchflusskammer ein und kommt hier in Kontakt mit der zu der jeweiligen Durchflusskammer gehörenden Elektrode 2 oder zumindest mit dem durch die Elektroden 2 aufgebauten elektrischen Feld. Dadurch wird die elektrochemische Behandlung vorgenommen. Anschließend tritt die Flüssigkeit durch den jeweiligen Ablauf 24 wieder aus. Die beiden in Figur 3a nicht dargestellten Durchflusskammern werden folglich auf der jeweils äußeren Seite durch die Elektrode 2 und auf der gegenüberliegenden Innenseite durch die Membran 30 beschränkt, die insbesondere vorteilhafterweise eine ionenselektive Membran sein kann. Dadurch wird ein Übertritt bestimmter Ionen von einer Durchflusskammer in eine andere Durchflusskammer ermöglicht.

Figur 3b zeigt eine Querschnittdarstellung durch die Elektrodenanordnung 10 mit ihren Kammergehäusen 14 und den Abdeckplatten 16. Auch hier sind Elektroden 2, Kontaktfedern 26, Kontaktplatten 28 und elektrische Anschlüsse 20 dargestellt. Zwischen den beiden Elektroden 2 verläuft die Membran 30, die die beiden auch in Figur 3b vorhandenen Durchflusskammern voneinander trennt.

In Figur 3b sind zudem die Bohrungen 18 in den Abdeckplatten 16 gezeigt, durch die Schrauben 32 geführt sind, um für einen sicheren Halt der Abdeckplatten 16 und der Kammergehäuse 14 aneinander zu sorgen. Man erkennt in Figur 3b die Struktur 8 an der jeweiligen Innenseite der Elektrode 2, die die Elektrodenoberfläche 4 bildet.

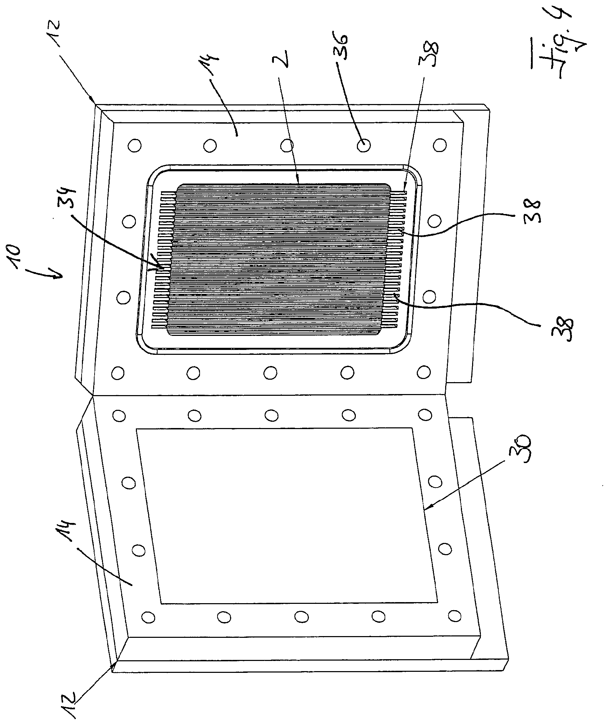

Figur 4 zeigt die Elektrodenanordnung 10 im aufgeklappten Zustand. Sie ermöglicht folglich den Blick in eine Durchflusskammer 34. Man erkennt in Figur 4 zudem, dass auch die Kammergehäuse 14 über Bohrungen 36 verfügen, die mit den Bohrungen 18 in den Abdeckplatten 16 fluchtend übereinander gelegt werden.

An dem in Figur 4 rechts dargestellten Kammergehäuse 14 ist die Elektrode 2 dargestellt, die über Längsrillen, die in Figur 4 von oben nach unten verlaufen, verfügt, die gemeinsam die Struktur 8 bilden. Die Flüssigkeit, insbesondere das zu behandelnde Wasser, tritt über den in Figur 4 nicht gezeigten Zulauf 22 in die Durchflusskammer 34 ein und wird über Führungselemente 38 über die Elektrodenoberfläche 4 geführt.

An dem in Figur 4 links dargestellten Kammergehäuse 14 ist die Membran 30 angeordnet, die im geschlossenen Zustand der Elektrodenanordnung 10 die Durchflusskammer 34 auf der der Elektrode 2 gegenüberliegenden Seite begrenzt.

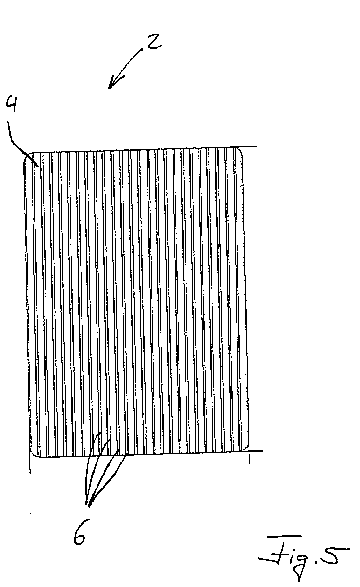

Figur 5 zeigt eine weitere schematische Draufsicht auf eine Elektrode 2, die an der Elektrodenoberfläche 4 Vertiefungen 6 aufweist. Man erkennt in Figur 5, dass die Elektrode 2 eine Länge und eine Breite aufweist, die den Gesamtabmessungen der in Figur 5 gezeigten Elektrode entsprechen. Eine ebene Fläche mit gleichen Abmessungen entspräche der Grundfläche der Elektrode 2.

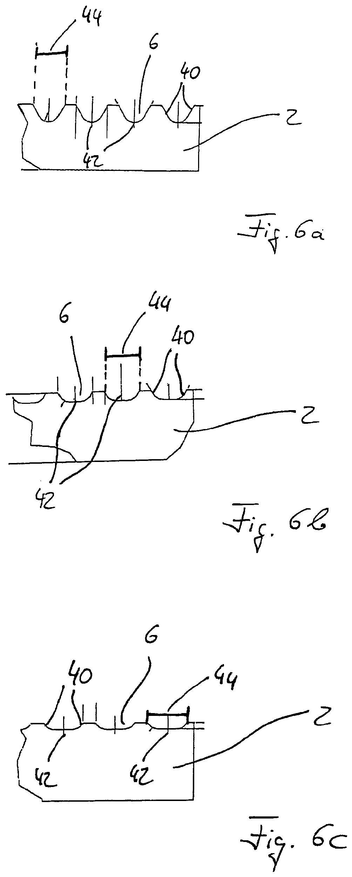

Figuren 6a bis 6c zeigen Ausschnitte aus Schnittdarstellungen durch die in Figur 5 gezeigte Elektrode 2, wobei die einzelnen Vertiefungen 6, die gemeinsam die Struktur 8 bilden, unterschiedlich ausgebildet sind. In den Figuren 6a bis 6c sind die einzelnen Vertiefungen 6 Längsnuten. In den Figuren 6a und 6b verfügen die Nuten über abgeschrägte Wände 40, die in den gezeigten Ausführungsbeispielen einen Winkel von 60° einschließen. Die Nuten verfügen jeweils über eine Nutenmitte 42, bezüglich derer die Nuten spiegelsymmetrisch ausgebildet sind. Die Abstände zwischen zwei benachbarte Nutenmitten 42 sind in den Ausführungsbeispielen gemäß den Figuren 6a und 6b gleich und betragen beispielsweise 4 mm. Allerdings unterscheiden sich die Nuten in den Figuren 6a und 6b in ihrer Tiefe. Während bei dem in 6a gezeigten Ausführungsbeispiel eine Nutentiefe von beispielsweise 1,6 mm vorliegt, sind die einzelnen Nuten in Figur 6b lediglich 0,8 mm tief. Eine Nutenbreite 44 ist für beide Ausführungsbeispiele identisch und beträgt beispielsweise 3 mm, so dass der Abstand zwischen zwei benachbarten Nuten 1 mm beträgt. Natürlich sind auch Nuten mit anderen Neigungswinkeln der Wände 40, anderen Abständen zwischen einander und anderen Nutenbreiten 44 denkbar.

In Figur 6c ist eine Struktur gezeigt, die aus relativ flachen Nuten beispielsweise mit einer Tiefe von 0,5 mm besteht. Auch diese Nuten verfügen über eine Nutenmitte 42 und eine Nutenbreite 44 von 3 mm. Die Wände 40 sind jedoch im gezeigten Ausführungsbeispiel im Querschnitt kreissegmentförmig ausgebildet und verfügen beispielsweise über einen Radius von 1 mm.

### Bezugszeichenlisten

- 2: Elektrode
- 4: Elektrodenoberfläche
- 6: Vertiefung
- 8: Struktur
- 10: Elektrodenanordnung
- 12: Gehäuse
- 14: Kammergehäuse
- 16: Abdeckplatte
- 18: Bohrung
- 20: elektrischer Anschluss
- 22: Zulauf
- 24: Ablauf
- 26: Kontaktfeder
- 28: Kontaktplatte
- 30: Membran
- 32: Schraube
- 34: Durchflusskammer
- 36: Bohrung
- 38: Führungselement
- 40: Wand
- 42: Nutenmitte
- 44: Nutenbreite

## Patentansprüche

1. Elektrodenanordnung (10) für eine elektrochemische Behandlung einer Flüssigkeit, wobei die Elektrodenanordnung (10)
zwei Elektroden (2) mit jeweils wenigstens einer Elektrodenoberfläche (4), wobei die wenigstens eine Elektrode (2) eine Diamantelektrode ist und wenigstens eine Durchflusskammer (34) mit wenigstens einem Zulauf (22) und wenigstens einem Ablauf (24) aufweist,
wobei die wenigstens eine Durchflusskammer (34) an zumindest einer ersten Seite durch wenigstens eine Elektrode (2) begrenzt wird, die an ihrer Elektrodenoberfläche (4) eine Struktur (8) aufweist, so dass ein Abstand zwischen der Elektrodenoberfläche (4) und einer der ersten Seite gegen-über liegenden zweiten Seite der Durchflusskammer (34) variiert, **dadurch gekennzeichnet, dass** die Struktur (8) wenigstens 30 % der Elektrodenoberfläche (4) bildet und derart ausgebildet ist, dass der Abstand zwischen der Elektrodenoberfläche (4) und der zweiten Seite entlang wenigstens einer Richtung mehrfach zu- und abnimmt, und dass durch die Durchflusskammer (34) fließende Flüssigkeit durch die Struktur (8) durchmischt und insbesondere in eine turbulente Strömung versetzt wird, wobei die die Struktur (8) eine Vielzahl von Vertiefungen (6), Kanälen, Rillen oder Nuten aufweist.

2. Elektrodenanordnung (10) nach Anspruch 1, **dadurch gekennzeichnet, dass** die Struktur (8) wenigstens 50 %, bevorzugt wenigstens 60 %, weiter bevorzugt wenigstens 75 %, besonders bevorzugt wenigstens 90 % der Elektrodenoberfläche (4) bildet.

3. Elektrodenanordnung (10) nach einem der vorstehenden Ansprüche, **dadurch gekennzeichnet, dass** sie zwei Durchflusskammern (34) aufweist, die jeweils an zumindest einer ersten Seite durch wenigstens eine Elektrode (2) begrenzt werden, die an ihrer Elektrodenoberfläche (4) eine Struktur (8) aufweisen, so dass ein Abstand zwischen der Elektrodenoberfläche (4) und einer der ersten Seite gegenüberliegenden zweiten Seite der jeweiligen Durchflusskammer (34) variiert.

4. Elektrodenanordnung (10) nach einem der vorstehenden Ansprüche, **dadurch gekennzeichnet, dass** die Vertiefungen (6), Kanäle, Rillen oder Nuten eine variierende Breite und/oder Tiefe aufweisen.

5. Elektrodenanordnung (10) nach einem der vorstehenden Ansprüche, **dadurch gekennzeichnet, dass** die Struktur (8) eine Vielzahl von einander insbesondere überlappenden Vertiefungen (6), die insbesondere kugelflächensegmentförmig ausgebildet sind, aufweist.

6. Elektrode (2) für eine Elektrodenanordnung (10) nach einem der vorstehenden Ansprüche.

7. Verfahren zum Betreiben einer Elektrodenanordnung (10) nach einem der vorstehenden Ansprüche, **dadurch gekennzeichnet, dass** die Flüssigkeit durch den wenigstens einen Zulauf (22) in die wenigstens eine Durchflusskammer (34) eingeleitet wird, innerhalb der Durchflusskammer (34) durch die Struktur (8) auf der Elektrodenoberfläche (4) durchmischt und insbesondere in eine turbulente Strömung versetzt wird und die wenigstens eine Durchflusskammer (34) durch den wenigstens einen Ablauf (24) verlässt.

8. Verfahren nach Anspruch 7, **dadurch gekennzeichnet, dass** eine Flüssigkeit durch jede vorhandene Durchflusskammer (34) geleitet wird, wobei durch verschiedene Durchflusskammern (34) unterschiedliche Mengen der jeweiligen Flüssigkeit geleitet werden.

9. Verfahren nach Anspruch 7 oder 8, wobei eine Elektrodenanordnung (10) gemäß einem der Ansprüche 3 bis 5 verwendet wird, bei dem
a) reines Wasser, insbesondere destilliertes Wasser oder Ultrareinstwasser, durch die erste Durchflusskammer (34) und die zweite Durchflusskammer (34) geleitet wird,
b) das reine Wasser, insbesondere destilliertes Wasser oder Ultrareinstwasser, in den Durchflusskammern (34) durch die Strukturen (8) der Elektrodenoberflächen (4) durchmischt und insbesondere in eine turbulente Strömung versetzt wird,
c) die Elektroden (2) mit einer elektrischen Spannung beaufschlagt werden, so dass sich in zumindest einer Durchflusskammer (34) ozonisiertes Wasser bildet.

## Claims

1. An electrode arrangement (10) for electrochemically treating a liquid, wherein the electrode arrangement (10) has
two electrodes (2), each of which has at least one electrode surface (4), wherein the at least one electrode (2) is a diamond electrode, and
at least one through-flow chamber (34) with at least one inlet (22) and at least one outlet (24),
wherein the at least one through-flow chamber (34) is delimited on at least one first side by at least one electrode (2) which has a structure (8) on its electrode surface (4) such that a distance between the electrode surface (4) and a second side of the through-flow chamber (34) opposite the first side varies, **characterized in that** the structure (8) forms at least 30% of the electrode surface (4) and is configured such that a distance between the electrode surface (4) and the second side increases and decreases multiple times along at least one direction, and such that the liquid flowing through the through-flow chamber (34) is mixed by means of the structure (8) and is caused in particular to flow in a turbulent manner, wherein the structure (8) has a plurality of recesses (6), channels, grooves or slots.

2. The electrode arrangement (10) as claimed in claim 1, **characterized in that** the structure (8) forms at least 50%, preferably at least 60%, more preferably at least 75%, and particularly preferably at least 90% of the electrode surface (4).

3. The electrode arrangement (10) as claimed in one of the above claims, **characterized by** having two through-flow chambers (34), each of which is delimited on at least one first side by at least one electrode (2), said electrodes having a structure (8) on their electrode surface (4) such that a distance between the electrode surface (4) and a second side of the respective through-flow chamber (34) opposite the first side varies.

4. The electrode arrangement (10) as claimed in one of the above claims, **characterized in that** the recesses (6), channels, grooves or slots have varying width and/or depth.

5. The electrode arrangement (10) as claimed in one of the above claims, **characterized in that** the structure (8) has a plurality of recesses (6), which in particular are overlapping one another, which in particular are configured in the form of spherical surface segments.

6. An electrode (2) for an electrode arrangement (10) as claimed in one of the above claims.

7. A method for operating an electrode arrangement (10) as claimed in one of the above claims, **characterized in that** the liquid is fed through the at least one inlet (22) in the at least one through-flow chamber (34), mixed in the through-flow chamber (34) by means of the structure (8) on the electrode surface (4), and caused in particular to flow in a turbulent manner, and flows out from the at least one through-flow chamber (34) through the at least one outlet (24).

8. The method as claimed in claim 7, **characterized in that** a liquid is fed through every through-flow chamber (34), wherein different amounts of the respective liquid are fed through different through-flow chambers (34).

9. A method as claimed in claim 7 or 8, wherein an electrode arrangement (10) is used as claimed in one of claims 3 through 5, wherein
a) pure water, in particular distilled water or ultrapure water, is fed through the first through-flow chamber (34) and the second through-flow chamber (34),
b) the pure water, in particular distilled water or ultrapure water, is mixed in the through-flow chambers (34) by means of the structures (8) on the electrode surfaces (4) and is caused in particular to flow in a turbulent manner, and
c) the electrodes (2) are supplied with electrical voltage such that ozonated water forms in at least one through-flow chamber (34).

## Revendications

1. Ensemble d'électrodes (10) pour un traitement électrochimique d'un liquide, l'ensemble d'électrodes (10) comportant deux électrodes (2) ayant chacune au moins une surface d'électrode (4), ladite au moins une électrode (2) étant une électrode à diamant et comprenant au moins une chambre de passage (34) ayant au moins une entrée (22) et au moins une sortie (24),
dans lequel
ladite au moins une chambre de passage (34) est délimitée sur au moins une première face par au moins une électrode (2) qui présente une structure (8) sur sa surface d'électrode (4), de sorte qu'une distance entre la surface d'électrode (4) et une seconde face, opposée à la première face, de la chambre de passage (34) est variable,
**caractérisé en ce que**
la structure (8) constitue au moins 30 % de la surface d'électrode (4) et est réalisée de telle sorte que la distance entre la surface d'électrode (4) et la seconde face augmente et diminue plusieurs fois le long d'au moins une direction, et qu'un liquide traversant la chambre de passage (34) est mélangé et en particulier mis en écoulement turbulent par ladite structure (8), la structure (8) comprenant une multitude de cavités (6), de canaux, de rainures ou de gorges.

2. Ensemble d'électrodes (10) selon la revendication 1,
**caractérisé en ce que**
la structure (8) constitue au moins 50 %, de préférence au moins 60 %, de manière encore préférée au moins 75 %, de manière particulièrement préférée absolue au moins 90 % de la surface d'électrode (4).

3. Ensemble d'électrodes (10) selon l'une des revendications précédentes,
**caractérisé en ce que**
il comprend deux chambres de passage (34) qui sont délimitées chacune sur au moins une première face par au moins une électrode (2) présentant une structure sur sa surface d'électrode (4), de sorte qu'une distance entre la surface d'électrode (4) et une seconde face, opposée à la première face, de la chambre de passage respective (34) est variable.

4. Ensemble d'électrodes (10) selon l'une des revendications précédentes,
**caractérisé en ce que**
les cavités (6), canaux, rainures ou gorges présentent une largeur et/ou profondeur variable.

5. Ensemble d'électrodes (10) selon l'une des revendications précédentes,
**caractérisé en ce que**
la structure (8) présente une multitude de cavités (6) en particulier en chevauchement mutuel, qui sont réalisées en particulier en forme de segment de surface sphérique.

6. Électrode (2) pour un ensemble d'électrodes (10) selon l'une des revendications précédentes.

7. Procédé pour faire fonctionner un ensemble d'électrodes (10) selon l'une des revendications précédentes,
**caractérisé en ce que**
le liquide est introduit à travers ladite au moins une entrée (22) dans ladite au moins une chambre de passage (34), il est mélangé à l'intérieur de la chambre de passage (34) par la structure (8) sur la surface d'électrode (4) et il est en particulier mis en écoulement turbulent, et il quitte ladite au moins une chambre de passage (34) à travers ladite au moins une sortie (24).

8. Procédé selon la revendication 7,
**caractérisé en ce que**
un liquide est guidé à travers chaque chambre de passage (34) existante, et différentes quantités du liquide respectif sont guidées à travers différentes chambres de passage (34).

9. Procédé selon la revendication 7 ou 8,
utilisant un ensemble d'électrodes (10) selon l'une des revendications 3 à 5,
dans lequel
a) de l'eau pure, en particulier de l'eau distillée ou de l'eau ultra-pure est guidée à travers la première chambre de passage (34) et la seconde chambre de passage (34),
b) l'eau pure, en particulier l'eau distillée ou l'eau ultra-pure est mélangée dans les chambres de passage (34) par les structures (8) des surfaces d'électrode (4) et est en particulier mise en écoulement turbulent,
c) les électrodes (2) sont soumises à une tension électrique, de sorte que de l'eau ozonisée se forme dans au moins une chambre de passage (34).
